(19) Europäisches Patentamt
European Patent Office
Office européen des brevets

(11) EP 3 406 375 A1

(12) EUROPEAN PATENT APPLICATION

(43) Date of publication:
**28.11.2018 Bulletin 2018/48**

(21) Application number: **17425053.0**

(22) Date of filing: **25.05.2017**

(51) Int Cl.:
***B23B 1/00*** *(2006.01)* ***B23B 35/00*** *(2006.01)*
***G05B 19/4093*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Camaga Srl**
**80146 Napoli (IT)**

(72) Inventors:
- **DEL PRETE, Antonio**
**73100 Lecce (Le) (IT)**
- **CAPALBO, Salvatore Vincenzo**
**73100 Lecce (Le) (IT)**

(74) Representative: **Conversano, Gabriele**
**Laforgia, Bruni & Partners srl**
**Via Michele Garruba, 3**
**70122 Bari (IT)**

# (54) METHOD FOR OPTIMIZATION OF MACHINING PRODUCTIVITY

(57) Method for optimizing process parameters in machining for chip removal to maximize productivity with respect to the maximum permissible wear band for the tool comprising the steps of:
to. Defining the conditions for the contour of the workmanship, said conditions comprising at least the material to be machined and the type of tool used;
b. Define the process parameters to be used for tool wear estimation, said parameters comprising at least: the tool-material contact time (t), the cutting speed (v) and feed (), and define For each of these parameters, a range of variability within which to search for optimal values;
c. Define a plan of experiments in which, for certain values of said parameters, the tool wear is analyzed at discrete time intervals and perform such a plan of experiments
d. Based on the data collected in point c. Estimate a regression equation that estimates the tool wear lip dependence (VB) from said process parameters;
is. Solve an optimization problem in which the values of said process parameters are determined, which minimize production time and minimize the number of tools used
Characterized in that:
In solving this optimization problem referred to in point e. It is imposed as a constraint respect for a maximum wear value (VBLim) of the wear lip (VB)
And from the fact that
For the estimation of wear lip dependence on process parameters, the estimated relationship at point d is used.

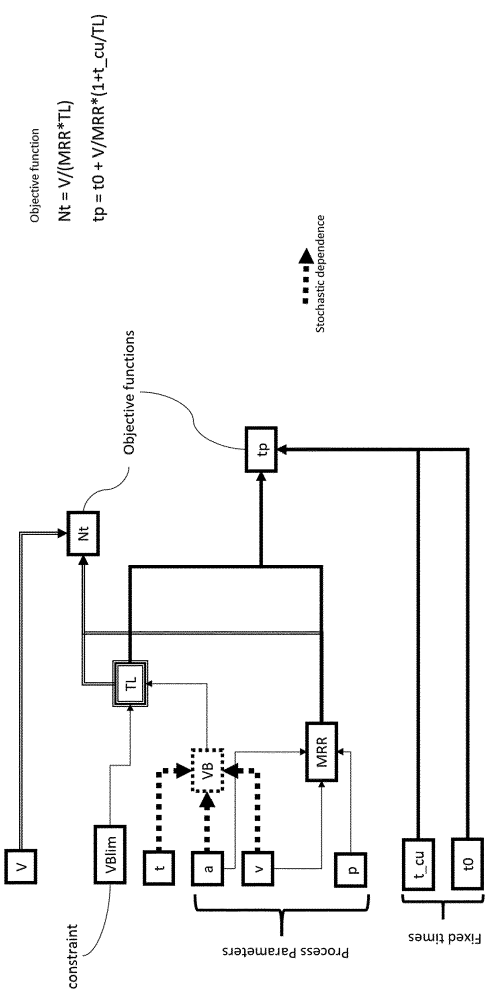


Fig. 1

EP 3 406 375 A1

**Description**

The present industrial invention relates to a method for the optimization of productivity in machining by chip removal.

Field of technique

U n material subjected to machining by chip removal is subject to high strain and high strain rate, and reaches high temperatures during the process. These phenomenamay significantly influence their behavior, especially for that category of alloys classified as "difficult to work." This class of materials includes the austenitic stainless steels, duplex steels and superduplex, nickel superalloys, titanium alloys, and some alloys obtained by powder metallurgy and heat treated. They are characterized by high mechanical resistance to high temperatures and corrosion, therefore they are widely used where critical component operation is required.

The metallurgical properties responsible for mechanical strength at high temperatures and creeps, however, are among the main causes of their poor machinability to machine tools, especially with regard to the speed with which the utensils used are worn. The characteristics of these materials that influence the phenomena of us ura toolcan be summarized in the following points:

- Quickness in the machining process;
- Abrasive action due to the presence of hard precipitates;
- Chemical action due to strong affinity with cutting materials;
- Adhesion / welding of the removed material on the tool tip, due to the strong pressures and the high temperatures reached in the course of machining;
- Low thermal conductivity, which generates strong thermal stresses both in the piece that in the tool, due to the onset of strong temperature gradients.

For these specific reasons, the machining of chip removal of these materials is still a big challenge today. The knowledge of the wear mechanisms in the processing of this alloy class assumes an important aspect in the proc control it and in its ottimizzazion and: in the orderto improve the durability of the tools should in fact be selectedappropriately the values of the process parameters (and of cutting speed, in particular, feed and depth of cut), since it is well known that the wear is a complex phenomenon,strongly dependent on these parameters: a F e ed rate and depth of cut are directly responsible for the increase of the forces of cut, which have a strong influence on the failure mechanisms of the tools. In addition, from the cutting speed it depends on the temperature of the process, and therefore the extent of wear phenomena involved.

The wear is basically due to adhesion mechanisms: when they are used the average values of cutting speed, the adhesion causes substantially frictional wear; when instead are adopted high values of cutting speed, wear is linked to mechanisms of diffusion and chimic or type. For these reasons, each type of tool has its own optimum cutting speed. E ’is known, to d example, in the case of machining of superalloys of nickel, sintered carbide tool uncoated, should be used in the range of 20-50 m / min cutting speed, while the same type of tools, but with this coating they should lavorar and in the range 40-90 m / min.

Many of Key Performance Indicators of the cutting process, such as the Material Removal Rate (MRR), are strongly influenced by wear of the tools, which is clearly dependent on the adopted process parameters. In fact, the wear interested in different aspects of machining by chip removal, among which the most important are undoubtedly the productivity and the quality of the machined surfaces.

TECHNICAL PROBLEM

Optimizing the cutting process therefore requires the simultaneous determination of several parameters, such as those related to the process conditions (cutting speed, feed and depth of cut) and the policies of substitution of the tools (definition of the maximum lip permissible wear), to End of maximize productivity and at the same timeminimize the costs for each piece or product box.

The problem is that n on is possible to define a deterministic relationship that binds the width of the tool wear lip (also referred to as VB) to the processing parameters,since they come into play in this dependence on many factors (such as the type of material to be machined and the tool geometry).

In the literature, several authors have proposed methods to optimize the performance of machining with machine tools of difficult materials to work with, such as the maximization of the material removal rate (MRR), in compliance with the appropriate assigned constraints (duration dell ’tool, quality of the machined surface and the request from the processing power). The one where it is considered to be the constraint on the life of the tool, it is an optimization problem standard, already studied by Taylor early in the last century.

In order to define the tool life, however, it is necessary to co noscere the stochastic relationship between the width of the lip wear, VB, and the processing parametersas well as the use of the tool the same time; this law to what has been said it can not be known to prio ri and must therefore be derived experimentally in each case.

PURPOSE

Purpose of the present invention is therefore to provide an innovative optimization methodology which allows to maximize the Material Removal Rate (thus the productivity), in compliance with a limit value assigned to the greatness stochastic VB (thus keeping a check on the surface quality of the machined workpiece).

This methodology is based on the development, by regression analysis, a suitable stochastic model of VB obtained utilizzand or data collected experimentally and on the formulation and resolution of a multi-objective optimization problem.

LIST OF SYMBOLS USED

| | |
|---|---|
| to | Tool advancement (mm) |
| MRR | Material Removal Rate (mm3 / min) |
| Nt | Tool change numbers |
| p | Past depth (mm) |
| t | T ime tool-material contact (min) |
| t_cu | Tool change time |
| t0 | Start time machining |
| TL | Tool lifetime (minutes) |
| tp | z ion produ time |
| V | Volume to be removed (mm3) |
| v | cutting speed (m / min) |
| VB | Lips of wear |
| VBlim | Fixed lip for wear lip (mm) |

SHORT DESCRIPTION OF THE FOUND

In Figure 2 it is shown the way in which, in the method according to the present invention, there is formalized the optimization problem set out above. As shown in the diagram in Figure 2, the optimization of the process parameters the aim is to minimize the two functions tp (production time) and Nt (number of tool changes): the twofoldobjective is to speed up to the maximum production and to contain the costs of replacing the tools.

Both of these functions depend on the goal of life 'tool (TL). Assign you the process parameters, in the tool life (TL) is the contact time between the tool and workpiece for which the wear lip (VB) remains below the maximum value (VBlim). When the operation time reaches the life of the tool (TL), the tool must be replaced. Since the dependence of the lip wear (VB) by process parameters (a, v, p) is of type stochastic, introduce the constraint on the maximum wear lip means and will introduce a constraint stochastic; In other words the tool life is not known a priori.

FIGURES

In Figure 1 is shown a diagram of the dip rends between the various quantities involved n the cutting process with a tool; In Figure 2 it is shown an explanatory flowchart of the steps of the optimization method according to the present invention; in Figure 3 it is shown the surveyors example of a tool; in Figure 4 there is shown a geometric patterning of the wear lip and a photographing of a tool with a display of wear lip; Figure 5 shows an example of a plan of experiments relating to the rates of cutting and advancement; in Figure 6 are shown, by way of example, the detections of the size of the lip wear as a function of time for a steel insert with F51 DUPLEXCNMG MM 160 612 2025; in Figure 7 it is shown the distribution of linear and (b) logarithmic scale residues (a); Figure 8 shows the historical results of the optimization algorithm for the number of cutting edges and the production time.

DETAILED DESCRIPTION OF THE FOUND

The optimization method according to the present invention, which is based on the wear modeling using the data collected it being suitably designed experimentalcampaigns, allows to optimize the productivity in machining of materials difficult to machine, taking into account the particular represented wear constraint d to a certain value of wear lip (VB).

As mentioned, in the size of the wear lip (VB) is a stochastic quantity that, fissat or the type of tool and some process conditions (toolpath, material properties, etc.). It depends on the depth of cut p (mm), by the advancement *in* (mm / rev) and the cutting speed *v* (m / min).

The optimization methodology consists of the following three distinct and interrelated phases, schematized in Figure 2:

1. Perform experimental campaigns for the collection of wear data;
2. Modeling wear through a regression analysis of collected data;
3. Process optimization: formalization and resolution of the problem.

Phase 1

As mentioned, the dependence of tool wear on process parameters varies depending on the type of tool, the type of material being machined, and the geometry of the workpiece, so it is necessary to estimate it on a case-by-case basis.

Experimental data collection campaigns are designed following the Design of Experiments (DOE) approach.

Once the contour parameters (material and type of workpiece, tool type) are set, the process parameters that can be changed are the depth of the past (p), the cutting speed (v) and the advancement (to). For these parameters a variability range will be estimated within which to search for optimal values.

As in other fields of research, even in the modeling Ile magnitudes of interest for chip removal machining, consequently in the modeling of the dependence of VB on the process parameters, the DOE allows you to monitor and control the variations of the responses of interest.

The most commonly used approach is that relative to the **plane of factorial experiments,** which provides an appropriate distribution of the experimental points in accordance with the principles mentioned above. In a factorial plane all, levels of a given factor are combined with all levels of each other. By way of example, in Figure 5 is shown a matric and experiments in the case of the cutting of a duplex steel F51, with insert CNMG 160 612 MM 2025. For each point p of the anus of the 'experiments on the tool wear analysis it is conducted according to the requirements of **ISO 3685: 1993 "Tool-life testing with single-point turning tools";** The measure also provides important information on the morphology of the worn areas and the characteristic parameters.

In Figure 4 (a) it shows the definition of the wear of the lip region, and then the VB, as provided by the standard. In Figure 4 (b), it is depicted an example of Vbmax measurement.

For each experimental point, the VB data is collected at predefined time intervals. P or ca n resist thus be constructed so-called "wear curves", which represent the trend of the lip of advancing wear of the machining time for each pair of process parameters assigned in terms of BCE.

In Figure 6 are shown the wear curves relating to the processing of steel F51 duplex with CNMG insert. Through a regression analysis, the collected data are then used in phase 2 for analytical modeling of wear.

Phase 2

The objective of this phase is to determine the relationship *VB = VB (t, a, v),* where *t,* a and *v* represent the regressors of the model (time, feed rate, cutting speed).

As for the form of regression equation, it is assumed at first a simple model with regressors of the first order and their interaction, considering gradually higher orders.

The quality of models is estimated by evaluating d and the following parameters:

- **Coefficient of determination R -Sq -** It is expressed in percentage and is interpreted as the proportion of variability of the observed response, which is explained by the linear regression model, so the more its value is high, the more the model can be considered reliable;
- **Coefficient of determination R -Sq correct (adj) -** It is used to evaluate the addition of a regressive variable to the model;
- **p-Value P -** Allows you to check, for each term of the regression, the null hypothesis, ie the hypothesis that a term does not have effects on the model. A low p-value (<0.05) indicates that it is possible to reject the null **hypothesis;**
- **R-Sq coefficient (Default) -** This indicates the ability of a model to make predictions.

By way of example, the following table shows the 'output on the analysis of r egress data relating to Example duplex stainless F51.

Regression Equation
LN VB = 17.9933 + t LN 0.283505 - 9.33379 1.66826 LN LN v + a + 0.0320733 LN LN 1.14453 t ^ 2 + v ^ 2

Summary of Model

S = 0.109688 R-Sq = 91.67% R-Sq (adj) = 91.32%
PRESS = 1.57433 R-Sq (pred) = 90.76%

Analysis of Variance

| Source | DF | Seq SS | Give SS | Give MS | F | P |
|---|---|---|---|---|---|---|
| Regression | 5 | 15.6204 | 15.6204 | 3.12407 | 259.659 | 0 |
| LN t | 1 | 1.5949 | .4201 | 0.42007 | 34.914 | 0 |
| LN v | 1 | 5.3107 | 0,095 | 0.09499 | 7,895 | 0.005804 |
| LN a | 1 | 8.5382 | 8.5398 | 8.53983 | 709.791 | 0 |
| LN t ^ 2 | 1 | .0498 | .0582 | .0582 | 4,837 | 0.029801 |
| LN v ^ 2 | 1 | .1268 | .1268 | 0.12683 | 10.541 | 0.00152 |
| error | 118 | 1.4197 | 1.4197 | 0.01203 | | |
| Total | 123 | 17.0401 | | | | |

It is evident, in this case, the goodness of the regression model (R -Sq, R-Sq (adj) and R-Sq (pred) are all higher than 90%), moreover, the analysis of the value P, it can be seen that all the terms of the regression are significant.

The study also is accompanied by the analysis of residues both graphical and quantitative. The goal of this phase is to check whether the residues comply with the followingfundamental potesi of normality and homoscedasticity.

Should one of the aforementioned hypothesis "main" should not be met, we resort to appropriate transformation of the data that permett anus respect of the statistical requirements. Among the usable transformations, we report the following:

- logarithmic;
- reverse;
- quadratic;
- Box-Cox transformations.

As can be seen from the analysis of Normal Probability Plot reported in the images of Figure 7, p er the regression model relative to the case of steel duplex F51, it was necessary to have recourse to logarithmic transformation (Figure 7b) since the residuals of the model initial (Figure 7) they were not normally distributed.

A further advantage of the normal probability graph is to allow an initial identification of potential outliers, represented by points sufficiently distant from the reference straight line. Outliers are abnormal observations with respect to the data group; the presence of a more outliers oo can lead to distortions on the resultant tati and should therefore be removed.

After defining the regression equation Is done the analysis of outliers, punt the lever and influence points. Concerning the latter, it is worth remembering the following:

- Lever points are those experimental points not aligned with the fitting pattern;
- An influential point is a point that, if removed, results in a remarkable change in the model’s ability to estimate.

For the regression model of the case duplex steel F51, the following table shows the output on the diag nosi of anomalous observations:

Fits and Diagnostics for Unusual Observations

| Obs | LN VBmax | Fit | SE Fit | residual | St Resid | |
|---|---|---|---|---|---|---|
| 2 | -2.26277 | 2.49056 | 0.029778 | 0.227795 | 2.15779 | R |

(continued)

| Obs | LN VBmax | Fit | SE Fit | residual | St Resid | | |
|---|---|---|---|---|---|---|---|
| 75 | -1.65474 | 1.56841 | 0.047061 | -0.08634 | -0.8714 | | X |
| 100 | -0.89404 | -1.1611 | 0.021155 | 0.267061 | 2.48132 | R | |

R denotes an observation with a large standardized residual.
X denotes an observation whose X value gives it great leverage.

The points denoted by R are the likely outlier while those marked with X are points that have a great influence on ello mod and therefore can not be removed.

Step 3

At this stage, the methodology developed requires the optimization problem to be formalized and then solved. The optimization problem relates to the maximization of the productivity, in accordance with the predetermined wear limit *(VBlim).*

L to objective function of the problem may be the maximization of the parameter Material Removal Rate *(MRR)* or minimization of production time *tp.*

The MRR can be expressed as the product of cutting speed *v, f* for the advancement and for the depth of cut *p*:

$$MRR = v * f * p$$

and it represents the amount of material removed per unit of time (expressed in $mm^3$ / min).
The production time instead is the sum of more terms and is expressed by the following report:

$$t_p = t_0 + \frac{V}{MRR}\left(1 + \frac{t_{cu}}{T_L}\right)$$

where $t_0$ are the fixed times (machine preparation, controls, etc.), $T_L$ is the tool life, $T_{cu}$ is the tool change time, *V* is the volume of material to be removed, *V*/*MRR* is the time of contact necessary for the production of the workpiece and *V* / *(MRR* $T_{L)}$ is the number of replacements of the cutting edges.

The constraint of the problem is therefore formed by the relationship

$$VB\ (v, a, t) = VBlim$$

wherein the first equation has been estimated in step 2, which can also be expressed as a function of tool life

$$T_L = T_L\ (f, v, VBlim).$$

It is worth mentioning that in fact VB and $T_L$ are directly connected as the duration of a tool, for certain values of *f* and *v,* appears to be uniquely determined if it is a fixed value *VBlim.*

To solve the optimization problem, you can use the method of the Response Surfaces (RSM, Response Surface Method), or suitable techniques meta-heuristics(Genetic Algorithm, Simulated Annealing, Pa rticle Swarm Optimization, etc.).
The formalization of the problem is described below, with two objective functions and the respect of a constraint.

**Lens Functions:**

Minimization of t ime production of $t_p$ and the number of sharp substitutions $N_t$

$$t_p = t_0 + \frac{V}{MRR}\left(1 + \frac{t_{cu}}{T_L}\right)$$

$$Nt = \frac{V}{MRR * T_L}$$

**Constraint:**

Width of wear lip *VB lower than a set value VBlim*

$$VB = VB\,(t, f, v) < VBlim$$

With reference to its duplex steel F51, the resolution technique is used in the Multi-Objective Particle Swarm Optimization (PSO-MO), a meta-heuristic that mimics the behavior of groups of animals in the phase of search for food. The volume of material to be removed for the workpiece used for the example is $V = 5 * 10^6 mm^3$ The research of the least of these functions is performed within the following variability space for the parameters:

$$0.3 \text{ mm / rev} < f < 0.5 \text{ mm / rev}$$

$$90 \text{ m / min} < v < 150 \text{ m / min}$$

The solution found by the algorithm MO-PSO is shown in the following table:

| F [mm / rev] | V [m / min] | Nt | $_L$T [min] | $T_P$[min] |
|---|---|---|---|---|
| 0.5 | 118 | 7.86 | 4.3 | 43.8 |

The Figure 8 images historians report relating to research by the algorithm solution MO-PSO Respectively of the objective functions: Nt (a) and tp (b).

## Claims

**1.** A method for l 'optimization of process parameters in a machining by chip removal which allows to maximize productivity in compliance with the maximum allowable wear constraint for the tool comprising the steps of:

to. Defining the boundary conditions of the process, said conditions comprising at least the material to be processed and the type of tool being used;
b. Define the process parameters to be used for tool wear estimation, said parameters comprising at least: the tool-material contact time (t), the cutting speed (v) and feed (), and define for cias c u no such a field of variability parameters within which to search for optimal values;
c. Define a plan of experiments in which, for certain values of said parameters, the tool wear is analyzed at discrete time intervals and perform such a plan of experiments
d. Based on the data collected in point c. Estimate a regression equation that estimates the tool wear lip dependence (VB) from said process parameters;
is. Solve an optimization problem in which the values of said process parameters are determined, which minimize production time and minimize the number of tools used
**characterized in that**:

In solving this optimization problem referred to in point e. It is imposed as a constraint respect for a maximum wear value (VBLim) of the wear lip (VB)

And from the fact that
For the estimation of wear lip dependence on process parameters, the estimated relationship at point d is used.

**2.** Method for the optimization of process parameters in a machining by chip removal according to the one rivendicaz 1, **characterized in that** said process parameters from Use clean for tool wear estimate comprise the depth (p).

**3.** Method for optimizing process parameters in a chip removal process according to claim 1 or 2, **characterized in that** said plan of experiments is a plan of experimental type

**4.** Method for optimizing process parameters in a chip removal process according to one of the preceding claims **characterized by** the fact that the regression equation is an equation with regressors of the order rpimo and their interactions.

**5.** Method for optimizing process parameters in machining for chip removal according to one of the preceding claims, **characterized in that** the objective function of said optimization problem referred to in e). Is the production time tp.

**6.** Method for optimizing process parameters in a chip removal process according to one of the preceding claims, **characterized in that** said optimization problem referred to in item (e). Also includes maximizing the Material Removal Rate.

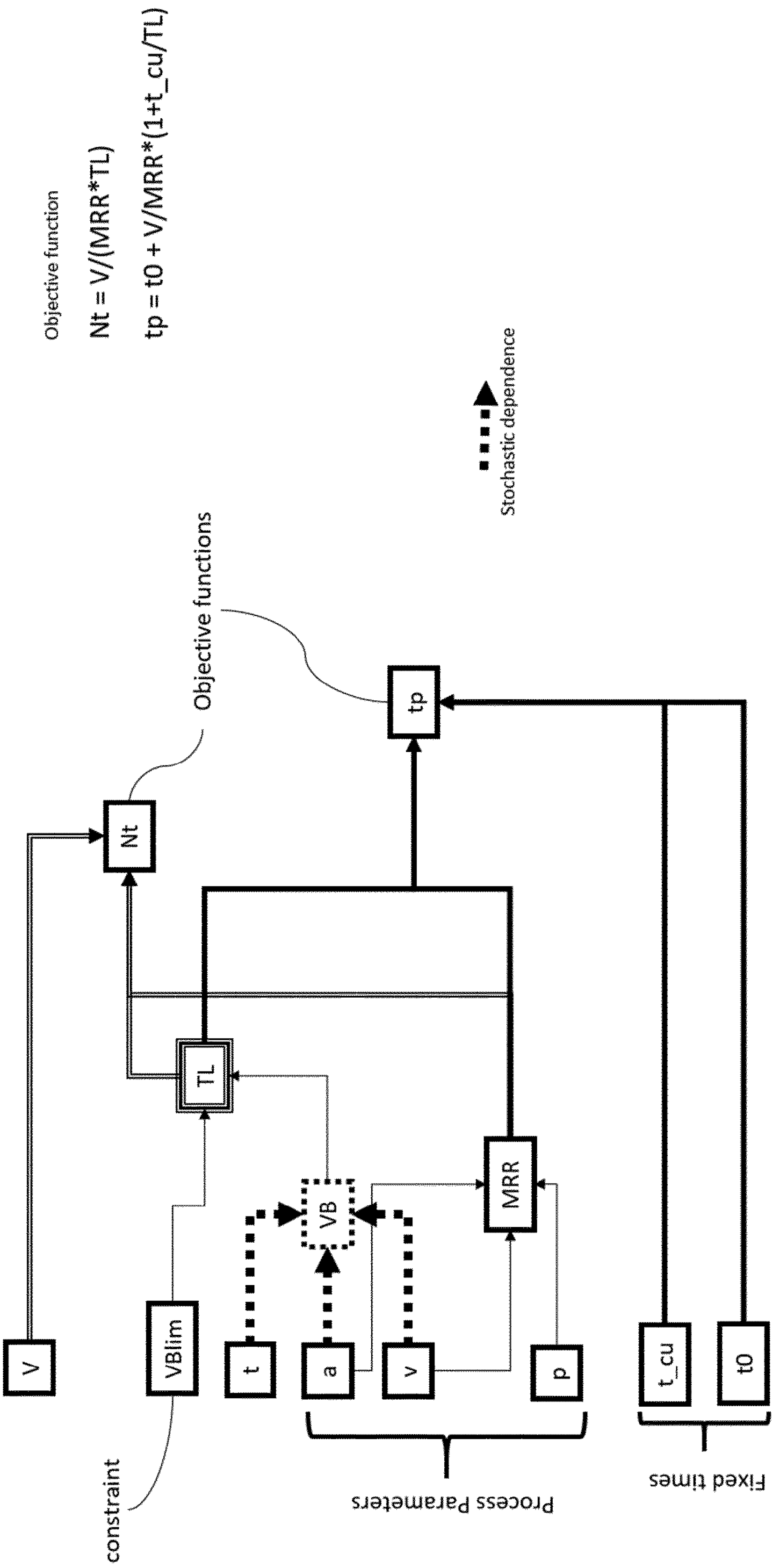
Objective function
Nt = V/(MRR*TL)
tp = t0 + V/MRR*(1+t_cu/TL)
Stochastic dependence
Objective functions
Nt
tp
TL
VB
MRR
V
VBlim
t
a
v
p
t_cu
t0
constraint
Process Parameters
Fixed times

Fig. 1

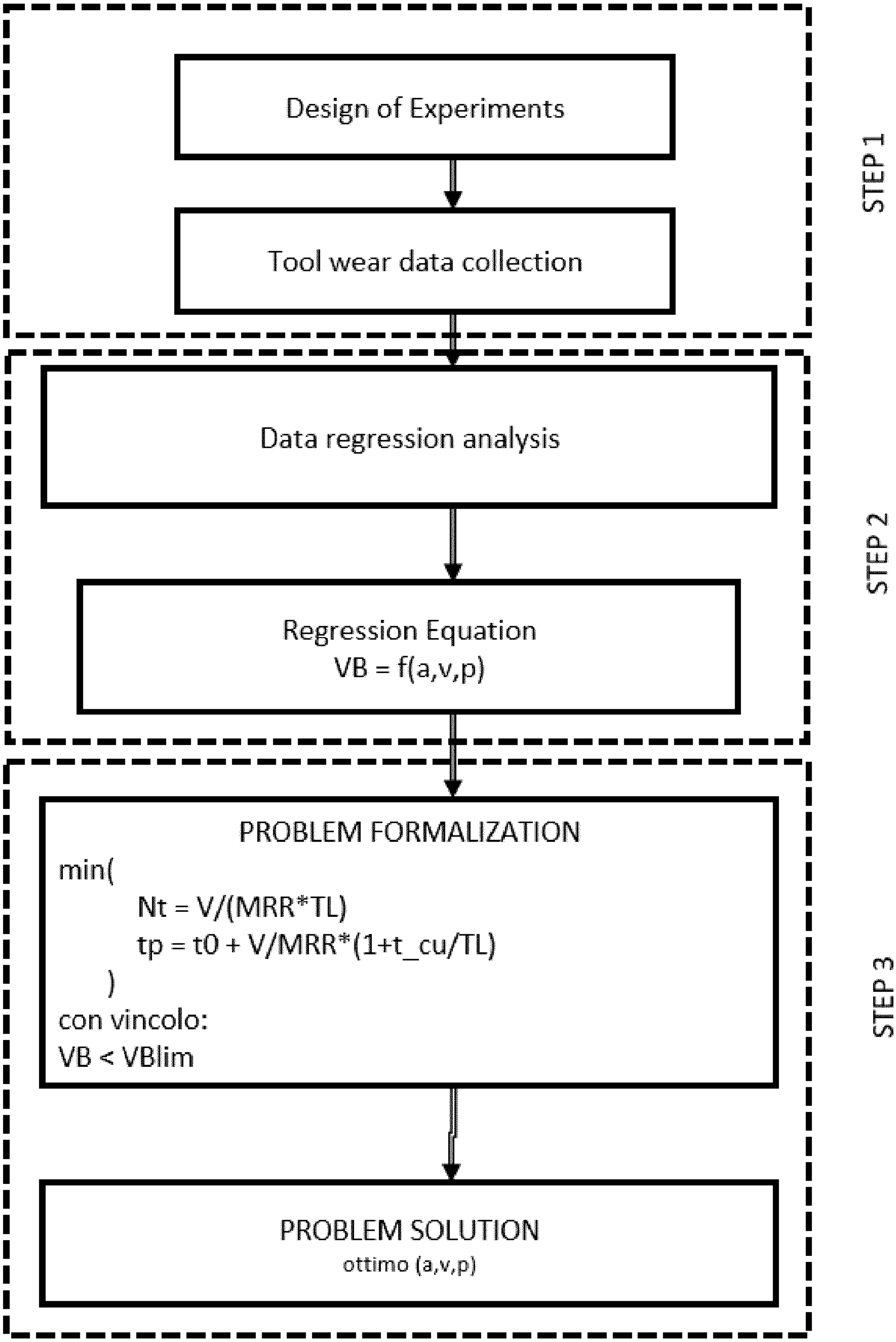
Design of Experiments
Tool wear data collection
STEP 1
Data regression analysis
Regression Equation
VB = f(a,v,p)
STEP 2
PROBLEM FORMALIZATION
min(
Nt = V/(MRR*TL)
tp = t0 + V/MRR*(1+t_cu/TL)
)
con vincolo:
VB < VBlim
PROBLEM SOLUTION
ottimo (a,v,p)
STEP 3

Fig. 2

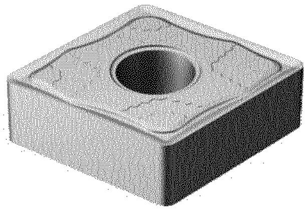

Fig. 3

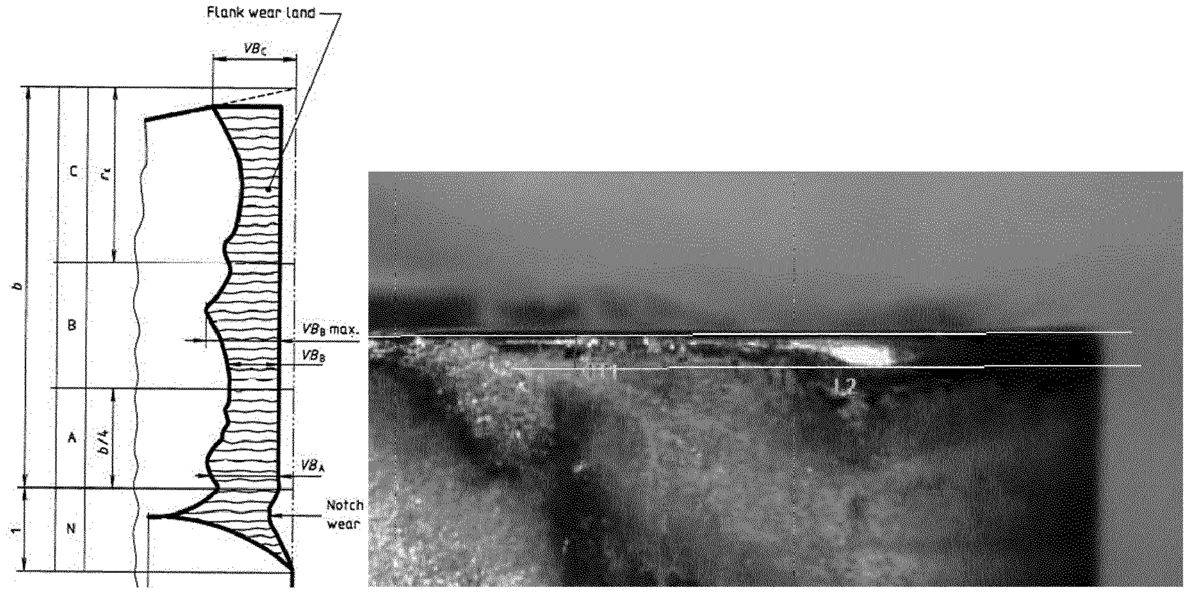


(a) (b)

Fig. 4

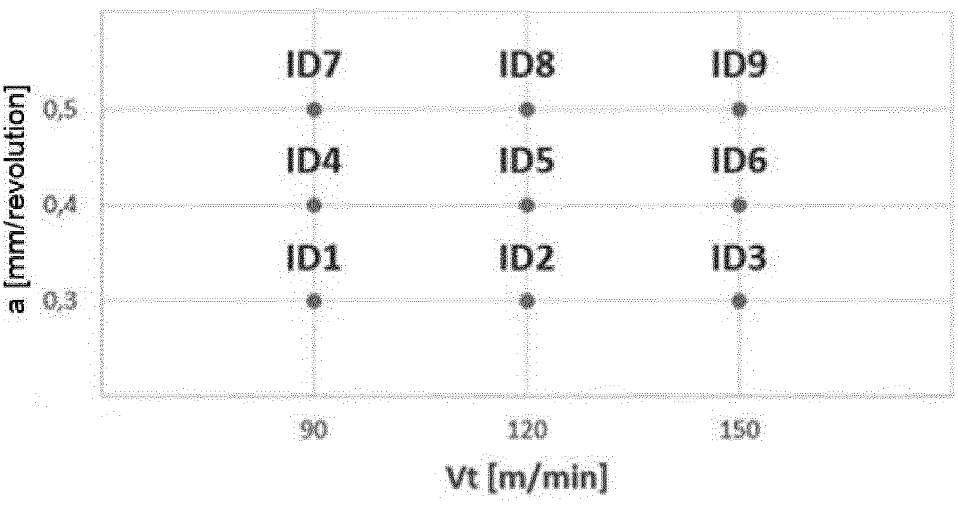


Fig. 5

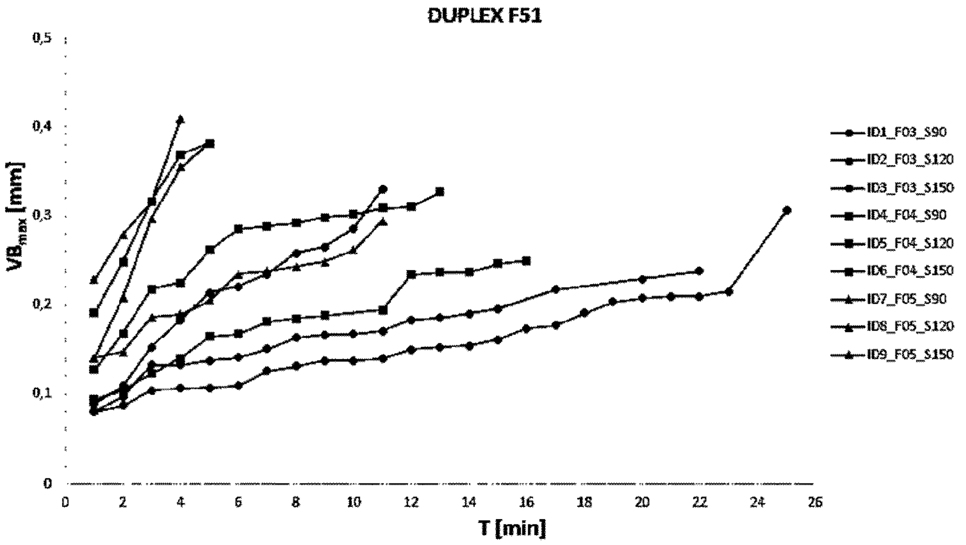


Fig. 6

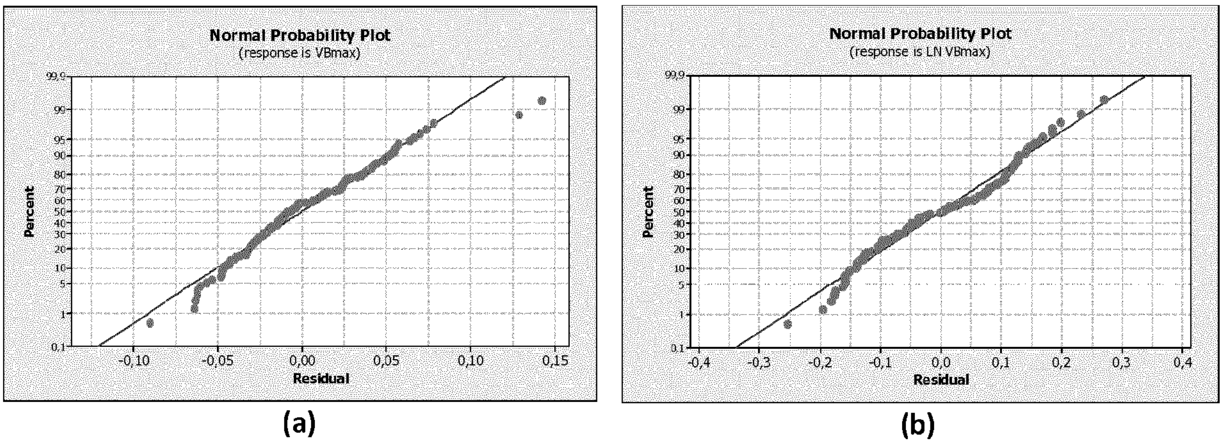


(a) (b)

Fig. 7

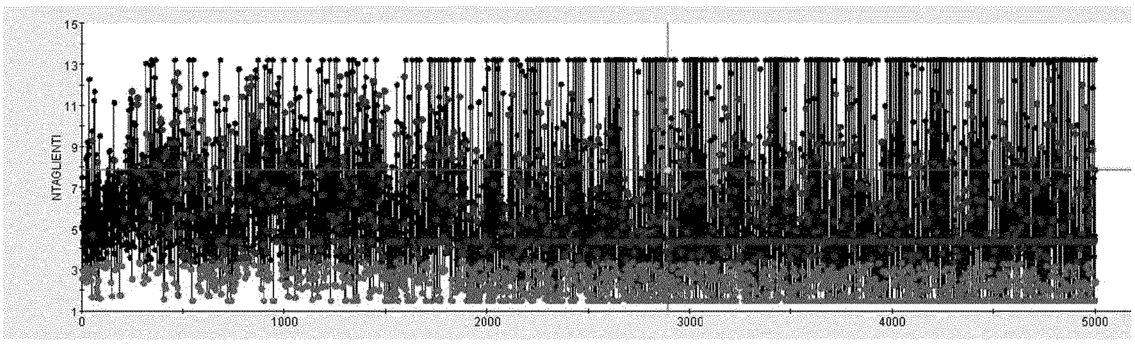


(a)

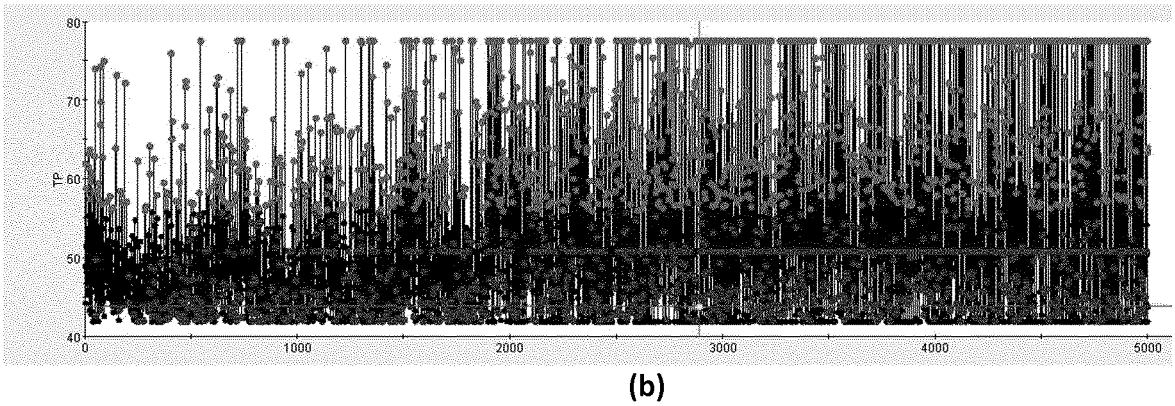


(b)

Fig. 8

Europäisches Patentamt
European Patent Office
Office européen des brevets

# EUROPEAN SEARCH REPORT

Application Number
EP 17 42 5053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/015229 A1 (HUANG SUJIAN [US]) 20 January 2005 (2005-01-20) * paragraph [0013] - paragraph [0147] * * figures 1-19 * | 1-6 | INV. B23B1/00 B23B35/00 G05B19/4093 |
| A | US 5 903 474 A (SADLER JOHN P [US] ET AL) 11 May 1999 (1999-05-11) * column 2, line 36 - column 17, line 37 * * figures 1-7 * | 1-6 | |
| A | CN 102 609 591 A (UNIV HUAZHONG SCIENCE TECH) 25 July 2012 (2012-07-25) * paragraph [0001] - paragraph [0093] * * figures 1-7 * | 1-6 | |

TECHNICAL FIELDS SEARCHED (IPC)
B23B
B23C
G05B

The present search report has been drawn up for all claims

1

| Place of search | Date of completion of the search | Examiner |
|---|---|---|
| The Hague | 28 November 2017 | Mioc, Marius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 17 42 5053

This annex lists the patent family members relating to the patent documents cited in the above-mentioned European search report. The members are as contained in the European Patent Office EDP file on
The European Patent Office is in no way liable for these particulars which are merely given for the purpose of information.

28-11-2017

| Patent document cited in search report | Publication date | Patent family member(s) | Publication date |
|---|---|---|---|
| US 2005015229 A1 | 20-01-2005 | US 2005015229 A1<br>US 2014039854 A1 | 20-01-2005<br>06-02-2014 |
| US 5903474 A | 11-05-1999 | NONE | |
| CN 102609591 A | 25-07-2012 | NONE | |

EPO FORM P0459

For more details about this annex : see Official Journal of the European Patent Office, No. 12/82